# EUROPÄISCHE PATENTSCHRIFT

(11) **EP 2 423 057 B1**
(45) Veröffentlichungstag und Bekanntmachung des Hinweises auf die Patenterteilung: **19.06.2013**
(21) Anmeldenummer: 11001022.0
(22) Anmeldetag: 25.08.2010
(51) Int. Cl.: B60R 22/20

(54) **Vorrichtung zur Höhenverstellung des Umlenkbeschlages von Sicherheitsgurten**
Device for adjusting the height of the deflection fitting of safety belts
Dispositif de reglage en hauteur de la patte de guidage de ceintures de securite

(43) Veröffentlichungstag der Anmeldung: 29.02.2012
(62) Teilanmeldung aus: 10401148.1
(73) Patentinhaber: Innovative Components Technologies GmbH, 57368 Lennestadt (DE)
(72) Erfinder: Schauerte, Andre, 57368 Lennestadt (DE); Lohmann, Horst, 59846 Sundern (DE)
(74) Vertreter: Köchling, Conrad-Joachim

(56) Entgegenhaltungen:
- EP-A1- 0 636 522
- EP-A2- 0 186 830
- EP-A2- 1 033 294
- EP-A2- 1 095 826
- DE-A1- 3 707 956
- DE-A1- 19 951 292
- DE-A1-102009 007 407

## Beschreibung

Die Erfindung eine Vorrichtung zur Höhenverstellung des oberen Umlenk- oder Befestigungsbeschlages für den Schultergurt eines Sicherheitsgurtsystems in Fahrzeugen, bestehend aus einer an einem Fahrzeugteil befestigten Führungsschiene, einem in der Führungsschiene verstellbar angeordneten Verstellschlitten sowie einem am Verstellschlitten schwenkbar angeordneten Riegel mit mindestens einer Rastnase, der in eine Verschiebestellung und eine Raststellung verschwenkbar ist, in der die Rastnase in Rastfenster oder Rastausnehmungen der Führungsschiene eingreift, wobei die Schwenkachse des Riegels durch Lagerzapfen gebildet ist, die in Lagerlochungen des Verstellschlittens eingreifen.

Eine solche Vorrichtung ist beispielsweise aus der DE 10 2009 007 407 A1 bekannt.

Bei der bekannten Anordnung ist der Riegel aus einem mehrlagigen Teil gebildet, nämlich einem Kunststoffteil und als Riegelelemente dienenden Metallteilen. Die Funktion dieser Elemente ist in der angegebenen Druckschrift beschrieben.

Die Anordnung bei vorliegender Anmeldung kann gegebenenfalls in ähnlicher Weise erfolgen.

Bei der bekannten Anordnung sind die Lagerzapfen aus Kunststoff geformt und einstückig mit dem Trägerelement ausgebildet. Eine solche Anordnung ist in mehrerer Hinsicht nachteilig. Durch diese Ausbildung ist eine ausreichende Beweglichkeit zwischen dem Riegel und dem Verstellschlitten nicht in allen Betriebssituationen sichergestellt, insbesondere dann nicht, wenn das Fahrzeug durch einen Crash belastet wird. Es kann dann geschehen, dass die Lagerzapfen sich nicht ausreichend in den entsprechenden Aufnahmen des Verstellschlittens drehen, so dass die Funktion des Gurthöhenverstellers insgesamt beeinträchtigt ist. Auch dann, wenn das hiermit ausgerüstete Fahrzeug beispielsweise eine Vollbremsung durchführt, ist die Drehbarkeit des Riegels nicht ausreichend, so dass Fehlstellungen eintreten können.

Aus der gattungsgemäβen EP 0 186 830 A2 ist eine ähnliche Höhenverstelleinrichtung für den Umlenkbeschlag eines Sicherheitsgurtes bekannt. Auch hierbei liegen die vorgenannt geschilderten Nachteile vor.

Ausgehend von diesem Stand der Technik liegt der Erfindung die Aufgabe zugrunde, eine Vorrichtung gattungsgemäßer Art zu schaffen, bei der die Funktionstüchtigkeit verbessert ist.

Zur Lösung dieser Aufgabe wird vorgeschlagen, dass der Verstellschlitten einen Verbindungsbereich zwischen seinen die Lagerschilde für die Lagerzapfen bildenden

Seitenwandungen aufweist, der oberhalb des Riegels positioniert ist und eine Führungskontur aufweist, in der ein Führungsvorsprung des Riegels geführt ist.

Durch die hohen Beschleunigungskräfte eines Gurtstraffers kann es erforderlich sein, den Riegel mit dem maximal möglichen Abstand zu benachbarten Bauteilen auszulegen, um deren Einfluss auf das Einriegelverhalten aus einer Zwischenposition während der Beschleunigung zu vermeiden. Dies kann auch durch die in Schwingung versetzten Seitenwände des Verstellschlittens im Bereich des Riegels durch die Beschleunigungskräfte hervorgerufen werden.

Um sicherzustellen, dass der Riegel eine entsprechende Symmetrieführung zur Einhaltung seiner Achslagerüberdeckung und der Rastfenster der Führungsschiene erreicht, wird eine Zentrierung durch die Führungskontur in Zusammenwirken mit dem Führungsvorsprung des Riegels erreicht.

Vorzugsweise ist dabei vorgesehen, dass die Führungskontur als parallel zur Längsachse der Führungsschiene gerichtete Nut ausgebildet ist und der Führungsvorsprung durch einen Längssteg des Riegels insbesondere eines Trägerelementes des Riegels, gebildet ist.

Insbesondere ist auch vorgesehen, dass der die Führungskontur aufweisende Verbindungsbereich als stabilisierter Bereich ausgebildet ist.

Die als Nut ausgebildete Führungskontur liegt im stabilisierten Bereich des Verstellschlittens, so dass sich eventuell auftretende Schwingungen während der Gurtstrafferbeschleunigung nicht auf diese Führung beziehungsweise das Einriegelverhalten des Riegels auswirken. Die Funktion ist damit gegenüber den bisherigen Ausbildungen verbessert.

Bevorzugt ist zudem vorgesehen, dass die Lagerzapfen durch einen separaten Lagerbolzen gebildet sind, der den Riegel durchgreift. Der separate Lagerbolzen kann aus sämtlich geeigneten Werkstoffen bestehen, also aus Stahl, Kunststoff, Aluminium oder auch Kombinationen hieraus. Der Lagerbolzen kann in beliebiger Weise hergestellt werden, beispielsweise als Drehteil, Spritzgießteil, Kaltfließpressteil oder dergleichen. Durch die Ausbildung des separaten Lagerbolzens wird eine crash- und montageoptimierte Ausbildung erreicht. Der Lagerbolzen soll die Beschleunigungskräfte bei der Gurtstrafferauslösung im Crashfall aufnehmen und die Rotation und somit das Verriegeln des Riegels mit den entsprechenden Konturen der Führungsschiene aus einer Zwischenposition sicherstellen. Zudem wird auch eine Kraftaufnahme bei der täglichen Fahrsituation (Vollbremsung) sichergestellt.

Bevorzugt ist hierbei vorgesehen, dass der Riegel aus einem Trägerelement und Verriegelungsteilen besteht, wobei der Lagerbolzen diese Bestandteile in Lagerlochungen durchgreift.

Besonders bevorzugt ist zudem vorgesehen, dass der Lagerbolzen in Montagesolllage axial unverschieblich am Riegel oder an den Riegel seitlich umgebenden Lagerschilden des Verstellschlittens positioniert ist.

Es ist hierdurch sichergestellt, dass der Lagerbolzen in der Montagesolllage sich nicht relativ zu den Lagerstellen verschieben kann.

Alternativ oder zusätzlich ist aus dem gleichen Grunde vorgesehen, dass die Führungsschiene im Querschnitt nach Art eines C-Profils geformt ist, wobei in Montagesolllage Schenkelteile der Führungsschiene mit Abstandsspiel den Enden des Lagerbolzens gegenüber angeordnet sind.

Bevorzugt ist zudem vorgesehen, dass die Lagerstellen des Verstellschlittens, die die Enden des Lagerbolzens aufnehmen und lagern, durch Verstärkungen in den Lagerschilden des Verstellschlittens gebildet sind.

Die Verstärkungen in den Lagerschilden des Verstellschlittens bieten eine vorzügliche Lagerung für die Enden des Lagerbolzens.

Weiterhin wird als bevorzugt angesehen, dass das Trägerelement des Riegels aus Kunststoff besteht und an seinen Seitenflächen Positionierhilfsflächen oder -konturen aufweist und /oder an seinen Seitenflächen angeformte Fixierstifte aufweist, und dass die Verriegelungsteile zwischen den Positionierhilfsflächen oder -konturen eingepasst sind und /oder mit Lochungen auf die Fixierstifte aufgesteckt sind, wobei entweder nur ein Klemmsitz oder auch eine formschlüssige Verprägung zur Sicherung der Montagesolllage vorgesehen ist.

Durch diese Anordnung ist es möglich, die Verriegelungsteile am Trägerelement sicher zu fixieren, wobei das Trägerelement ein Formteil aus Kunststoff ist. Über die entsprechenden Konturen und insbesondere über den Fixierstift können die Verriegelungsteile lagerichtig angeordnet und fixiert werden, wobei die Verriegelungsteile auf die Fixierstifte formschlüssig aufgesteckt werden können und geklemmt gehalten werden oder aber, bei Bedarf, auch formschlüssig verprägt gehalten werden, indem die Fixierstifte nach dem Aufstecken der Verriegelungsteile verprägt werden.

Ein Ausführungsbeispiel der Erfindung ist in der Zeichnung dargestellt und im Folgenden näher beschrieben. Es zeigt:

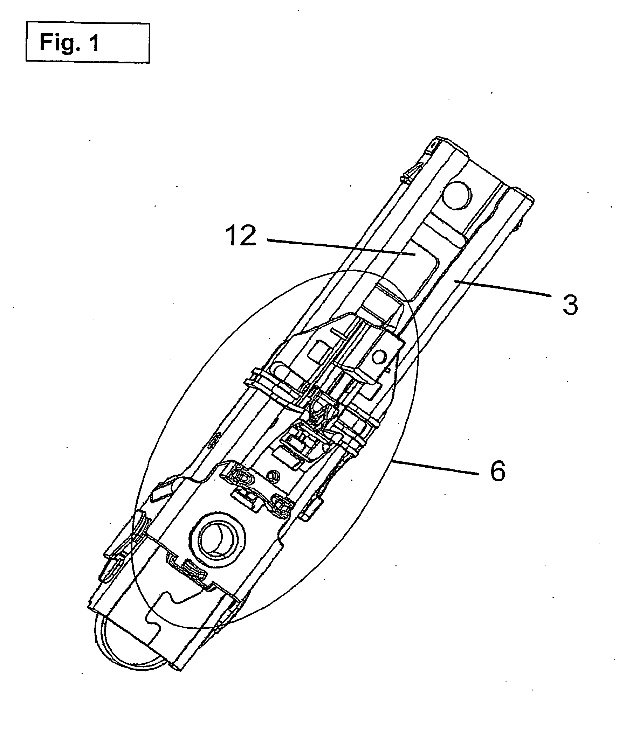

- Figur 1: eine erfindungsgemäße Vorrichtung in Ansicht gesehen;
- Figur 2: desgleichen im Mittellängsschnitt gesehen;
- Figur 3: desgleichen im Schnitt F-F der Figur 2 gesehen;

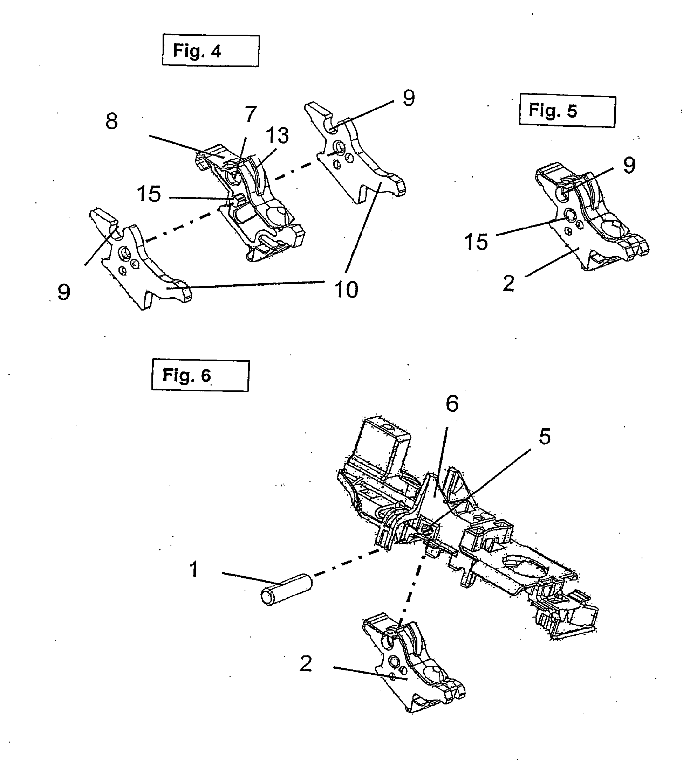

- Figur 4: eine Explosionsdarstellung der Bestandteile des Riegels;
- Figur 5: die Teile im Zusammenbau;
- Figur 6: eine Explosionsdarstellung, die den Riegel, den Verstellschlitten und den Lagerbolzen zeigt.

In der Zeichnung ist eine Vorrichtung zur Höhenverstellung des oberen Umlenk- oder Befestigungsbeschlages für den Schultergurt eines Sicherheitsgurtsystems in Fahrzeugen gezeigt. Sie besteht im Wesentlichen aus einer an einem Fahrzeugteil befestigbaren Führungsschiene 3, einem in der Führungsschiene 3 verstellbar angeordneten Verstellschlitten 6 sowie einem am Verstellschlitten 6 schwenkbar angeordneten Riegel 2, der in eine Verschiebestellung und einer Raststellung verschwenkbar ist. In der Raststellung greift die Rastnase des Riegels 2 in Rastfenster oder Rastausnehmungen 12 der Führungsschiene 3 ein. In bekannter Weise weist der Riegel unterschiedliche Wirkflächen auf, nämlich eine vorspringende elastische Fläche, die zunächst bei der Verriegelung in Eingriff kommt und einer gegenüber dieser zurückstehende Metallriegelfläche, die bei einer Crasheinwirkung an der entsprechenden Kante des Rastfensters der Führungsschiene zur Anlage kommt. Solche Ausbildungen sind im Stand der Technik bekannt.

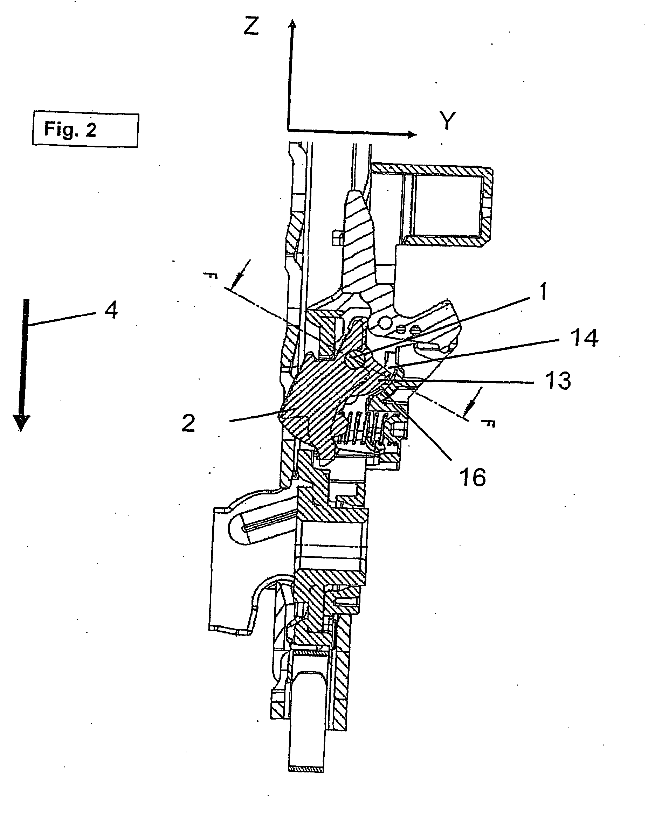

Der Riegel weist eine Schwenkachse auf. Diese Schwenkachse greift in Lagerlochungen 5 des Verstellschlittens 6 in Solllage ein. Gemäß der Erfindung sind die Lagerzapfen durch einen separaten Lagerbolzen 1 gebildet, der den Riegel 2 durchgreift. Der Lagerbolzen 1 soll die Beschleunigungskräfte, die mit dem Fall 4 in Figur 2 angegeben sind, bei der Gurtstrafferauslösung im Crashfall aufnehmen und mit ihrer erforderlichen Überdeckung in der Außenlagerung 5 eines Elementes des Verstellschlittens 6 die Rotation und somit das Verriegeln des Riegels 2 auch aus einer Zwischenposition sicherstellen können. Zudem ist eine Kraftaufnahme durch die normale Fahrsituation, beispielsweise bei Vollbremsung, sichergestellt. Um eine größtmögliche Lagerüberdeckung zu ermöglichen, ist die Länge des Lagerbolzens 1 möglichst groß ausgelegt. Dies schließt jedoch ein Montieren des Lagerbolzens 1 in Verbindung mit dem Riegel 2 durch ein Verclipsen oder einen ähnlichen Vorgang in die Lagerschale der Außenlagerung 5 des Verstellschlittens 6 aus, da dann Beschädigungen der Lagerstelle nicht ausgeschlossen werden könnten und/oder eine eindeutige Positionierung erschwert wird.

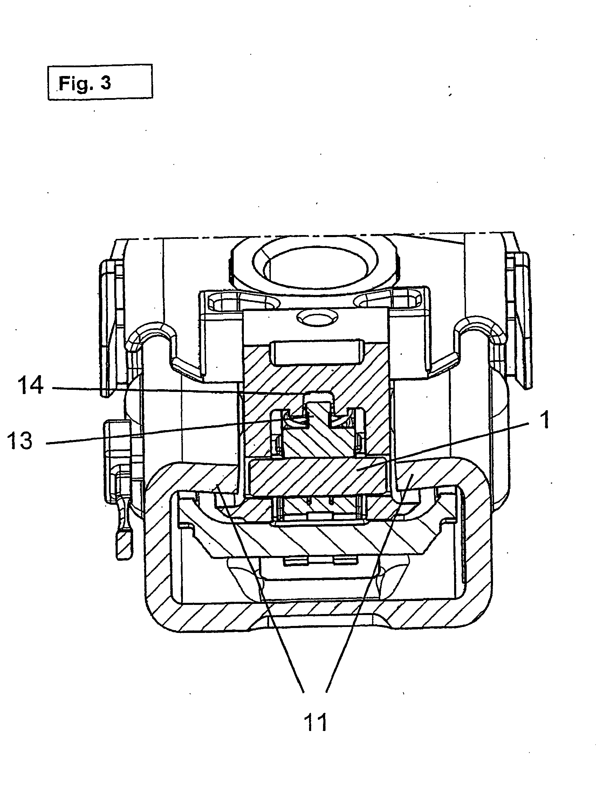

Aus diesem Grunde wird der Lagerbolzen 1 nach der Positionierung des Riegels 2 in den Verstellschlitten 6 seitlich in die Lagerstelle 5 des Verstellschlittens 6 und die Lagerlochung 9 des Riegels 2 eingeführt. Die Ausrichtung des Lagerbolzens 1 wird durch die Aufnahmebohrung 7 im Trägerelement 8 und die Lageröffnungen 9 in den beiden Verriegelungsteilen 10 unterstützt. Der Lagerbolzen 1 kann zur axialen Positionierung sowohl im Riegel 2, insbesondere in den Verriegelungsteilen 10 oder auch in der Lagerstelle 5 des Verstellschlittens 6 fixiert sein. Zusätzlich oder alternativ wird über die Schenkel 11 der als C-Profil ausgebildeten Führungsschiene 12 ein Austreten des Lagerbolzens aus der Lagerung verhindert, wie dies in Figur 3 verdeutlicht ist.

Der Lagerbolzen 1 kann aus beliebigen Werkstoffen bestehen, die je nach Notwendigkeit einzusetzen sind.

Insbesondere die Lagerstellen 5 des Verstellschlittens 6, die die Enden des Lagerbolzens 1 aufnehmen und lagern, sind durch Verstärkungen in den Lagerschilden des Verstellschlittens 6 gebildet.

Durch die hohen Beschleunigungskräfte in Richtung des Pfeiles 4 gemäß Figur 2 des Gurtstraffers kann es erforderlich sein, den Riegel 2 mit dem maximal möglichen Abstand zu benachbarten Bauteilen auszulegen, um deren Einfluss auf das Einriegelverhalten aus einer Zwischenposition, die beispielsweise in Figur 2 gezeigt ist, während der Beschleunigung zu vermeiden. Dies kann auch durch die in Schwingung versetzten Seitenwände des Verstellschlittens 6 im Bereich des Riegels 2 durch die Beschleunigungskräfte 4 hervorgerufen werden. Da der Riegel jedoch eine entsprechende Symmetrieführung zur Einhaltung seiner Achslagerüberdeckung (bei der Lagerung 5) und der Rastfenster der Führungsschiene 12 benötigt, wird diese Zentrierung über einen Führungsvorsprung 13, insbesondere einen Führungssteg am Riegel 2, insbesondere an dessen Trägerelement 8 einerseits und eine Führungskontur 14, insbesondere Führungsnut, eines Elementes des Verstellschlittens 6 erreicht. Der Bereich der Führungskontur 14 liegt in einem stabilisierten Bereich 16 des Verstellschlittens 6, so dass eventuell auftretende Schwingungen während der Gurtstrafferbeschleunigung nicht auf die Führung beziehungsweise das Einriegelverhalten des Riegels Einfluss nehmen können.

Schließlich ist noch zu bemerken, dass, um die Verriegelungsteile 10 im Trägerelement 8 sicher fixieren zu können, bei einer Ausführung des Trägerelementes 8 aus Kunststoff an diesem ein Fixierstift 15 und gegebenenfalls Haltekonturen oder dergleichen vorgesehen sind. Auf diese Elemente, insbesondere den Fixierstift 15 werden die Verriegelungsteile mit entsprechenden Lochungen aufgesteckt und klemmend gehalten. Gegebenenfalls können die Enden der Fixierstifte 15 auch verprägt werden, um einen formschlüssigen Zusammenhalt zu erreichen.

Die Erfindung ist nicht auf das Ausführungsbeispiel beschränkt, sondern im Rahmen der Offenbarung vielfach variabel.

## Patentansprüche

1. Vorrichtung zur Höhenverstellung des oberen Umlenk- oder Befestigungsbeschlages für den Schultergurt eines Sicherheitsgurtsystems in Fahrzeugen, bestehend aus einer an einem Fahrzeugteil befestigten Führungsschiene (3), einem in der Führungsschiene (3) verstellbar angeordneten Verstellschlitten (6) sowie einem am Verstellschlitten (6) schwenkbar angeordneten Riegel (2) mit mindestens einer Rastnase, der in eine Verschiebestellung und eine Raststellung verschwenkbar ist, in der die Rastnase in Rastfenster (12) oder Rastausnehmungen der Führungsschiene (3) eingreift, wobei die Schwenkachse des Riegels (2) durch Lagerzapfen gebildet ist, die in Lagerlochungen (5) des Verstellschlittens (6) eingreifen, **dadurch gekennzeichnet, dass** der Verstellschlitten (6) einen Verbindungsbereich zwischen seinen die Lagerschilde für die Lagerzapfen bildenden Seitenwandungen aufweist, der oberhalb des Riegels (2) positioniert ist und eine Führungskontur (14) aufweist, in der ein Führungsvorsprung (13) des Riegels (2) geführt ist.

2. Vorrichtung nach Anspruch 1, **dadurch gekennzeichnet, dass** die Führungskontur (14) als parallel zur Längsachse der Führungsschiene (3) gerichtete Nut ausgebildet ist und der Führungsvorsprung (13) durch einen Längssteg des Riegels (2) insbesondere eines Trägerelementes (8) des Riegels (2), gebildet ist.

3. Vorrichtung nach Anspruch 1 oder 2, **dadurch gekennzeichnet, dass** der die Führungskontur (14) aufweisende Verbindungsbereich als stabilisierter Bereich (16) ausgebildet ist.

4. Vorrichtung nach einem der Ansprüche 1 bis 3, **dadurch gekennzeichnet, dass** die Lagerzapfen durch einen separaten Lagerbolzen (1) gebildet sind, der den Riegel (2) durchgreift.

5. Vorrichtung nach Anspruch 4, **dadurch gekennzeichnet, dass** der Riegel (2) aus einem Trägerelement (8) und Verriegelungsteilen (10) besteht, wobei der Lagerbolzen (1) diese Bestandteile in Lagerlochungen (7,9) durchgreift.

6. Vorrichtung nach Anspruch 4 oder 5, **dadurch gekennzeichnet, dass** der Lagerbolzen (1) in Montagesolllage axial unverschieblich am Riegel (2) oder an den Riegel (2) seitlich umgebenden Lagerschilden des Verstellschlittens (6) positioniert ist.

7. Vorrichtung nach einem der Ansprüche 4 bis 6, **dadurch gekennzeichnet, dass** die Führungsschiene (3) im Querschnitt nach Art eines C-Profils geformt ist, wobei in Montagesolllage Schenkelteile (11) der Führungsschiene (3) mit Abstandsspiel den Enden des Lagerbolzens (1) gegenüber angeordnet sind.

8. Vorrichtung nach einem der Ansprüche 4 bis 7, **dadurch gekennzeichnet, dass** die Lagerstellen (5) des Verstellschlittens (6), die die Enden des Lagerbolzens (1) aufnehmen und lagern, durch Verstärkungen in den Lagerschilden des Verstellschlittens (6) gebildet sind.

9. Vorrichtung nach Anspruch 5, **dadurch gekennzeichnet, dass** das Trägerelement (8) des Riegels (2) aus Kunststoff besteht und an seinen Seitenflächen Positionierhilfsflächen oder -konturen aufweist und /oder an seinen Seitenflächen angeformte Fixierstifte (15) aufweist, und dass die Verriegelungsteile (10) zwischen den Positionierhilfsflächen oder - konturen eingepasst sind und /oder mit Lochungen auf die Fixierstifte (15) aufgesteckt sind, wobei entweder nur ein Klemmsitz oder auch eine formschlüssige Verprägung zur Sicherung der Montagesolllage vorgesehen ist.

## Claims

1. A device for adjusting the height of the upper deflection fitting or anchoring fitting for the shoulder belt of a safety belt system in motor vehicles, consisting of a guide rail (3) attached at a vehicle part, an adjusting carriage (6) adjustably arranged in the guide rail (3) and a latch (2) pivotably arranged at the adjusting carriage (6) and having at least one locking lug pivotable to a moving position and a locking position, in which the locking lug engages in locking windows (12) or locking recesses of the guide rail (3), the pivot axis of the latch (2) being formed by bearing pins, which engage in bearing holes (5) of the adjusting carriage (6), **characterized in that** the adjusting carriage (6) has a connection area between its side walls forming the bearing shields for the bearing pins, which connection area is positioned above the latch (2) and has a guiding contour (14), in which a guide projection (13) of the latch (2) is guided.

2. The device according to claim 1, **characterized in that** the guiding contour (14) is adapted as a groove oriented in parallel to the longitudinal axis of the guide rail (3), and the guide projection (13) is formed by a longitudinal web of the latch (2), in particular of a carrier element (8) of the latch (2).

3. The device according to claim 1 or 2, **characterized in that** the connection area having the guiding contour (14) is adapted as a stabilizing area (16).

4. The device according to one of claims 1 to 3, **characterized in that** the bearing pins are formed by a separate bearing pin (1), which passes through the latch (2).

5. The device according to claim 4, **characterized in that** the latch (2) consists of a carrier element (8) and locking portions (10), the bearing pin (1) passing through these components in bearing holes (7, 9).

6. The device according to claim 4 or 5, **characterized in that** the bearing pin (1) is positioned in the intended mounting position in an axially immovable manner at the latch (2) or at bearing shields of the adjusting carriage (6) located laterally to the latch (2).

7. The device according to one of claims 4 to 6, **characterized in that** the cross section of the guide rail (3) is shaped like a C rail, in the intended mounting position leg portions (11) of the guide rail (3) being arranged with play opposite to the ends of the bearing pin (1).

8. The device according to one of claims 4 to 7, **characterized in that** the bearing locations (5) of the adjusting carriage (6), which receive and support the ends of the bearing pin (1), are formed by reinforcements in the bearing shields of the adjusting carriage (6).

9. The device according to claim 5, **characterized in that** the carrier element (8) of the latch (2) is made of plastic material and has at its side faces auxiliary positioning faces or contours and/or fixing pins (15) integrally formed at its side faces, and that the locking portions (10) are fitted between the auxiliary positioning faces or contours and/or are placed with holes over the fixing pins (15), either only a press fit or also a positive embossing for securing the intended mounting position being provided.

## Revendications

1. Dispositif de réglage en hauteur de la ferrure supérieure de renvoi ou de fixation de la ceinture d'épaule d'un ensemble de ceintures de sécurité de véhicules automobiles, comportant un rail de guidage (3) fixé à une partie du véhicule, un glissoir de réglage (6) monté de manière réglable dans le rail de guidage (3) et un verrou (2) monté pivotant au glissoir de réglage (6) et comprenant au moins un tenon d'enclenchement, qui est pivotant dans une position de déplacement et une position d'enclenchement, dans laquelle le tenon d'enclenchement s'engrène dans des fenêtres d'enclenchement (12) ou des évidements d'enclenchement du rail de guidage (3), l'axe de pivotement du verrou (2) étant constitué par des tourillons s'engrenant dans des trous de support (5) du glissoir de réglage (6), **caractérisé en ce que** le glissoir de réglage (6) comprend une zone de liaison entre ses parois latérales formant les flasques pour les tourillons, qui se trouve au-dessus du verrou (2) et comprend un contour de guidage (14), dans lequel une saillie de guidage (13) du verrou (2) est guidée.

2. Dispositif selon la revendication 1, **caractérisé en ce que** le contour de guidage (14) est configuré comme une rainure orientée en parallèle à l'axe longitudinal du rail de guidage (3) et la saillie de guidage (13) est constituée par une entretoise longitudinale du verrou (2), en particulier d'un élément de support (8) du verrou (2).

3. Dispositif selon la revendication 1 ou 2, **caractérisé en ce que** la zone de liaison comprenant le contour de guidage (14) est configurée comme une zone stabilisée (16).

4. Dispositif selon une des revendications 1 à 3, **caractérisé en ce que** les tourillons sont constitués par un boulon de support (1) séparé, qui passe à travers le verrou (2).

5. Dispositif selon la revendication 4, **caractérisé en ce que** le verrou (2) consiste en un élément de support (8) et des pièces de verrouillage (10), le boulon de support (1) passant à travers ces composants dans des trous de support (7, 9).

6. Dispositif selon la revendication 4 ou 5, **caractérisé en ce que** le boulon de support (1) est positionné dans la position de montage nominale de manière immobile axialement au verrou (2) ou aux flasques du glissoir de réglage (6) entourant latéralement le verrou (2).

7. Dispositif selon une des revendications 4 à 6, **caractérisé en ce que** le rail de guidage (3) a une section en coupe selon un profil en C, dans la position de montage nominale des parties de patte (11) du rail de guidage (3) étant disposées avec jeu en face des extrémités du boulon de support (1).

8. Dispositif selon une des revendications 4 à 7, **caractérisé en ce que** les zones d'appui (5) du glissoir de réglage (6) recevant et supportant les extrémités du boulon de support (1) sont constituées par des renforcements dans les flasques du glissoir de réglage (6).

9. Dispositif selon la revendication 5, **caractérisé en ce que** l'élément de support (8) du verrou (2) est en matière plastique et comprend des faces ou contours auxiliaires de positionnement à ses faces latérales et/ou comprend des chevilles de fixation (15) intégrées à ses faces latérales, et que les pièces de verrouillage (10) sont montées entre les faces ou contours auxiliaires de positionnement et/ou sont placées avec des trous au-dessus des chevilles de fixation (15), seulement une assise par coinçage ou bien aussi un marquage craboté pour le verrouillage de la position de montage nominale étant prévu.
